# EUROPÄISCHE PATENTANMELDUNG

(11) **EP 1 302 395 A2**
(43) Veröffentlichungstag der Anmeldung: **16.04.2003**
(21) Anmeldenummer: 02019629.1
(22) Anmeldetag: 03.09.2002
(51) Int. Cl.: B62K 21/16, B62K 11/14

(54) **Stummellenker für Motorräder**

(30) Priorität: 13.10.2001 DE 10150703
(71) Anmelder: Bayerische Motoren Werke Aktiengesellschaft, 80809 München (DE)
(72) Erfinder: Meinecke, Mathias, 80992 München (DE); Venus, Robert, 12623 Berlin (DE)

(57) **Zusammenfassung**

Stummellenker bestehend aus einem Lenkergriff (3) und einem Lenkerhalter (2), der einen rohrförmigen Abschnitt aufweist, der in eine in das freie Ende eines "Stand- bzw. Gabelrohrs" eingesetzte Führungsbuchse eingeschoben ist. Zur axialen Befestigung des Lenkerhalters (2) in der Buchse (7) können ein oder mehrere Schrauben vorgesehen sein, die radial von außen durch das Gabelrohr (4) und die Buchse (7) geschraubt sind und in eine bzw. mehrere Ausnehmungen des Lenkerhalters (2) eingreifen. Zusätzlich ist eine Verdrehsicherung vorgesehen, die sicherstellt, dass der Lenkerhalter (2) stets drehfest mit dem Gabelrohr (4) verbunden bleibt. Ferner ist ein Endanschlag vorgesehen, der ein unbeabsichtigtes Herausziehen des Lenkerhalters (2) aus dem Standrohr (4) verhindert.

## Beschreibung

Die vorliegende Erfindung betrifft einen Stummellenker für Motorräder gemäß dem Oberbegriff des Patentanspruchs 1.

Aus der DE 44 19 944 A1 ist ein Stummellenker für Motorräder bekannt, der aus einem Lenkergriff und einem Lenkergriffhalter besteht. An einem Ende des Lenkergriffhalters ist eine "Befestigungsschelle" vorgesehen, die am freien Ende eines Gabelrohrs festgeklemmt ist.

Aus anmelderinternem Stand der Technik sind zwei grundsätzlich verschiedene Varianten von Motorradstummellenkern bekannt, nämlich eine erste Variante, bei der der Stummellenker wie bei der o.g. DE 44 19 944 A1 am oberen Gabel- bzw. Federbeinende festgeklemmt ist und eine zweite Variante, bei der der Stummellenker an der sog. Gabelbrücke angeschraubt ist, welche die beiden Gabelrohre miteinander verbindet. Bei der ersten Variante unterscheidet man wiederum zwei Untervarianten, nämlich eine mit Verdrehsicherung und eine ohne Verdrehsicherung. Bei der zweiten Variante unterscheidet man ebenfalls zwei Untervarianten, nämlich eine, bei der der Stummellenker zusätzlich am Gabel- bzw. Federbein festgeklemmt ist und eine weitere, bei der der Stummellenker ausschließlich mit der Gabelbrücke verschraubt ist.

Desweiteren wird zwischen Stummellenkern mit und ohne Verstellmöglichkeit unterschieden. Die Verstelleinrichtungen bekannten Stummellenker ermöglichen eine Verstellung längs in Fahrtrichtung, in Längsrichtung der Gabel- bzw. Standrohre sowie auch in fast allen Ebenen dazwischen. Bei einigen Motorrädern ist auch der Winkel zwischen den Stummeln und der Fahrzeuglängsachse einstellbar. Zum Verstellen des Stummellenkers müssen zunächst die Befestigungselemente gelöst werden. Anschließend wird der Stummellenker verschoben und die Befestigungselemente werden wieder festgezogen.

Üblicherweise wird die Lenkerverstellung vom Fahrer selbst und nicht von einer Fachwerkstatt ausgeführt. Dies birgt bei herkömmlichen Lenkern erhebliche Sicherheitsrisiken. Bei herkömmlichen Lenkern ist nämlich üblicherweise keine "redundante Sicherung" gegen Verdrehung und Lageverstellung vorhanden. Das heißt, wenn die "Lageverstellung" gelöst ist, ist keine Lenkmomenten- bzw. Lenkkräfteübertragung zum Vorderrad mehr möglich. Zur Lenkerverstellung ist aber üblicherweise gerade ein Lösen der "lenkkraftübertragenden Befestigungsmittel" erforderlich. Wenn der Lenker anschließend nicht wieder ordnungsgemäß befestigt wird, kann dies zur völligen Unlenkbarkeit des Motorrads bzw. zum Sturz führen.

Ein weiterer Nachteil herkömmlicher Lenkerverstellungen, die außen am Gabelrohr festgeklemmt sind bzw. die an der Gabelbrücke befestigt sind, ist der meist relativ große Bauraumbedarf.

Aufgabe der Erfindung ist es, einen Stummellenker zu schaffen, dessen Lenkerhöhe in einfacher Weise verstellbar ist und der eine gegenüber herkömmlichen Stummellenkern verbesserte Sicherheit aufweist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht in einem Stummellenker, der aus einem Lenkerhalter und einem Lenkergriff besteht, wobei der Lenkerhalter einen rohrförmigen Abschnitt aufweist, der in das freie Ende eines "Stand-bzw. Gabelrohrs" eingesetzt ist. Eine derartige Anordnung beansprucht sehr wenig Bauraum ist insbesondere aus Design-Gesichtspunkten von Vorteil.

Der rohrförmige "Schaftabschnitt" muß nicht unbedingt einen kreisförmigen Querschnitt haben, sondern kann alternativ dazu beispielsweise einen Vierkant- oder Polygonquerschnitt haben.

Nach einer Weiterbildung der Erfindung ist im Innern des freien Endes des Stand- bzw. Gabelrohrs eine Buchse angeordnet, die fest mit dem Standrohr verbunden ist. Die Buchse dient als Führung für den Lenkerhalter.

Zur axialen Befestigung des Lenkerhalters in der Buchse können ein oder mehrere Schrauben bzw. schraubenartige Elemente vorgesehen sein, die radial von außen durch das Gabelrohr und die Buchse geschraubt sind und in eine bzw. mehrere Ausnehmungen des Lenkerhalters eingreifen. Alternativ dazu kann der Lenkerhalter auch festgeklemmt oder festgespannt sein, von "oben" durch einen "Gummibalg". Als weitere Alternative kann der Lenkerhalter auch durch einen "Bajonettverschluß" mit dem Gabelrohr bzw. der darin angeordneten Buchse verbunden sein.

Vorzugsweise sind am Lenkerhalter in Axialrichtung mehrere beabstandete Ausnehmungen vorgesehen, die eine "Rasterung" bilden. Das heißt, die Lenkerhöhe ist gerastert bzw. in vordefinierten Lagen einstellbar.

Nach einer Weiterbildung der Erfindung ist zusätzlich eine Verdrehsicherung vorgesehen. Die Verdrehsicherung dient dazu, dass der Lenkerhalter stets drehfest mit dem Gabelrohr verbunden bleibt. Es ist also sichergestellt, daß das Motorrad lenkbar bleibt und der Lenker bzw. die "Lenkeraufnahme" nicht gegen die Fahrzeuglängsachse verdrehbar ist. Die Verdrehsicherung ist so konzipiert, dass sie auch dann wirksam ist, wenn der Lenker bzw. der Lenkerhalter in Axialrichtung nicht ordnungsgemäß fixiert ist.

Dies wird dadurch erreicht, dass der Lenkerhalter in Umfangsrichtung formschlüssig in die Buchse eingreift. Hierzu kann beispielsweise eine zwischen dem Lenkerhalter und der Buchse angeordnete Passfeder vorgesehen sein. Die Passfeder "sperrt" den Lenkerhalter in Umfangsrichtung, ermöglicht aber seine axiale Verschiebung bzw. Verstellung. Alternativ zu einer Passfeder kann auch eine Keil- bzw. Kerbverzahnung vorgesehen sein.

Bei Verwendung eines Lenkerhalters, der einen Schaftabschnitt mit einem Vierkant- oder Polygonquerschnitt aufweist, braucht überhaupt kein "zusätzliches Element" wie z.B. eine Passfeder vorgesehen sein. In diesem Fall ist nämlich bereits durch den "unrunden" Querschnitt des Schaftabschnitts eine Verdrehsicherung gewährleistet.

Vorzugsweise ist zusätzlich ein axialer Endanschlag vorgesehen. Der Endanschlag stellt sicher, dass der Lenkerhalter nicht aus dem Gabelrohr herausgezogen werden kann. Hierzu ist am Lenkerhalter eine axial verlaufende Längsnut vorgesehen, in die ein Endanschlagstift eingreift, der radial von außen durch das Gabelrohr bzw. die Buchse eingeschraubt bzw. eingesetzt ist. Der Lenkerhalter kann soweit aus dem Gabelrohr herausgezogen werden, bis der Endanschlagstift am Ende der Längsnut ansteht.

Vorzugsweise ist die Längsnut in Umfangsrichtung beabstandet von der Verdrehsicherung, d.h. der Passfeder angeordnet.

Die gesamte Lenkeranordnung ist spiegelsymmetrisch am Motorrad vorhanden. Das heißt, an beiden Gabelrohren, die durch eine Gabelbrücke miteinander verbunden sind, ist jeweils ein Stummellenker in der oben beschriebenen Weise angeordnet. Dabei können zur Verdrehsicherung in Fahrzeuglängsrichtung beide Lenkerhalter miteinander verbunden sein.

Zusammenfassend werden mit der Erfindung folgender Vorteile erreicht:
- Optisch ansprechende und bauraumsparende Anordnung eines Stummellenkers an einem Motorrad
- Redundant sicheres, insbesondere fehlbedienungssicheres Verstellsystem
- Leichte Bedienbarkeit durch Verstellrasterung, die eine definierte Lage der Lenkerstummel sicherstellt
- Enanschlagsicherung gegen unbeabsichtigtes Herausziehen des Lenkerhalters aus dem Standrohr
- Verdrehsicherung, die selbst bei gelöster Arretierung die Lenkbarkeit des Motorrads, d.h. eine Lenkkraftübertragung vom Lenker auf die Gabel sichergestellt

Im folgenden wird die Erfindung an Hand eines Ausführungsbeispiels im Zusammenhang mit der Zeichnung näher erläutert. Es zeigen:
- Figur 1: einen Stummellenker in perspektivischer Darstellung;
- Figur 2: eine Draufsicht auf den Stummellenker der Figur 1 mit vier verschiedenen Schnittlinien;
- Figur 3: einen Schnitt entlang der Schnittlinie A - A der Figur 2;
- Figur 4: einen Schnitt entlang der Schnittlinie B - B der Figur 2;
- Figur 5: einen Schnitt entlang der Schnittlinie C - C der Figur 2; und
- Figur 6: einen Schnitt entlang der Schnittlinie D - D der Figur 2.

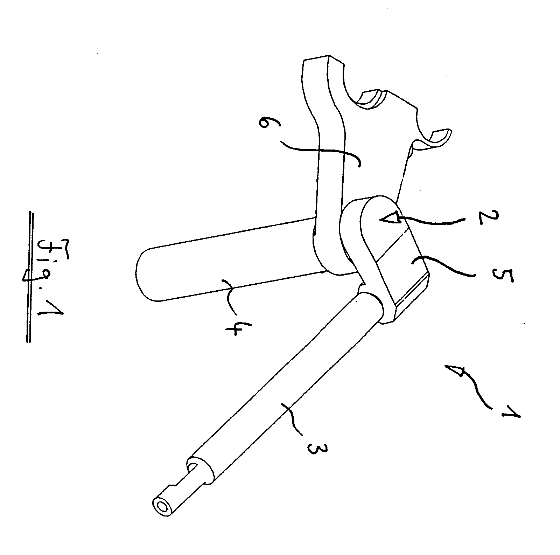

**Figur 1** zeigt einen Stummellenker 1 mit einem Lenkerhalter 2 und einem Lenkergriff 3. Von dem Lenkerhalter 2 ist hier nur das aus einem Gabelrohr bzw. Standrohr 4 herausstehende Kopfstück 5 zu sehen. Das Standrohr 4 ist über eine plattenartige Gabelbrücke 6 mit dem zweiten Standrohr (nicht dargestellt) des Motorrads verbunden.

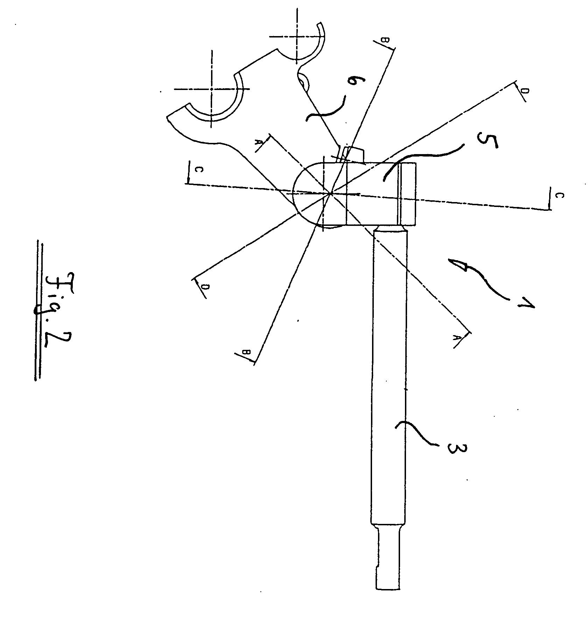

**Figur 2** zeigt eine Draufsicht auf den Stummellenker 1 der Figur 1. Ferner sind mehrer Schnittlinien A - A, B - B, C - C, D - D eingezeichnet.

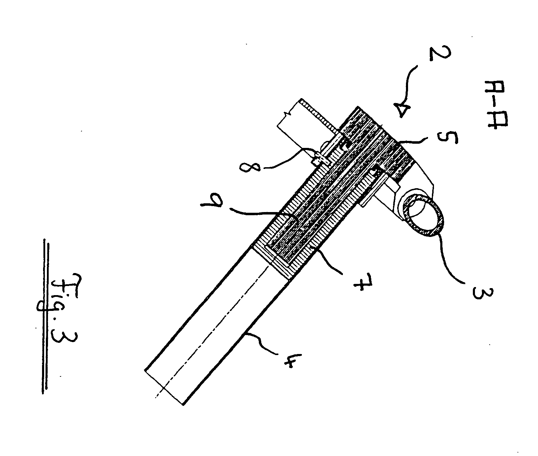

**Figur 3** zeigt einen Schnitt durch den Stummellenker entlang der Schnittlinie A - A der Figur 2. In das freie Ende des Standrohres 4 ist eine Führungsbuchse 7 eingesetzt. Die Buchse 7 ist im Standrohr 4 durch einen radial eingesetzten Spannstift 8 gesichert. Wie aus Figur 3 ersichtlich weist der Lenkerhalter 2 einen rohrförmigen Schaftabschnitt 9 auf, der hier einstückig mit dem Kopfstück 5 des Lenkerhalters 2 verbunden ist. Der Schaftabschnitt 9 ist im montierten Zustand fest mit der Buchse 7 bzw. dem Standrohr 4 verbunden. Durch Lösen von Arretierungsmitteln (hier nicht dargestellt) kann der Lenkerhalter 2 jedoch axial verstellt werden, d.h. der Schaftabschnitt 9 ist dann verschieblich in der Buchse 7.

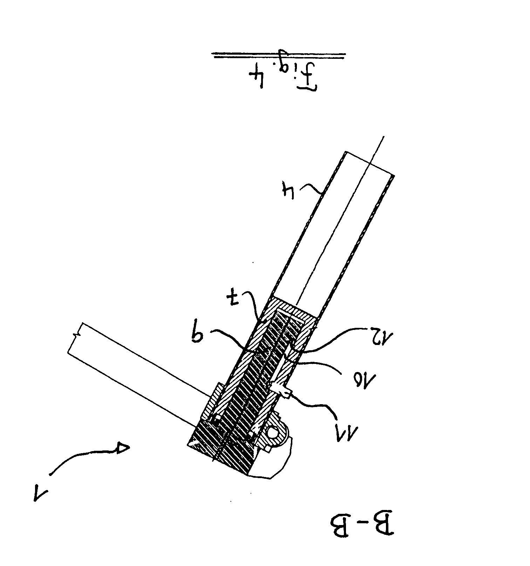

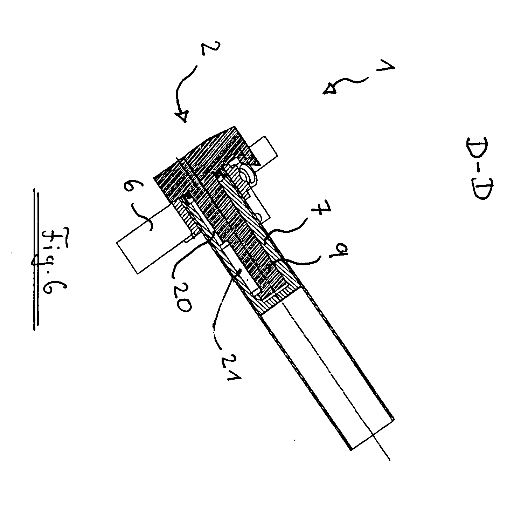

**Figur 4** zeigt einen Schnitt durch den Stummellenker 1 entlang der Schnittlinie B - B der Figur 2. In dieser Schnittansicht ist der "axiale Endanschlag" des Schaftabschnitts 9 des Stummellenkers 1 zu erkennen. Der Schaftabschnitt 9 weist eine Nut 10 auf, in die ein Stift 11 eingreift, der sich radial von außen durch das Standrohr 4 und die Buchse 7 in die Nut 10 erstreckt. Das Nutende 12 verhindert, dass der Lenkerhalter bei gelöster Arretierung zu weit aus dem Standrohr 4 bzw. der Buchse 7 herausgezogen wird. Durch den "Endanschlag" ist somit auch bei gelöster Arretierung sichergestellt, dass der Stummellenker 1 mit dem Standrohr 4 verbunden bleibt. Außerdem ist durch die in Zusammenhang mit Figur 6 beschriebene Verdrehsicherung sichergestellt, dass das Motorrad auch bei gelöster Lenkerarretierung lenkbar bleibt.

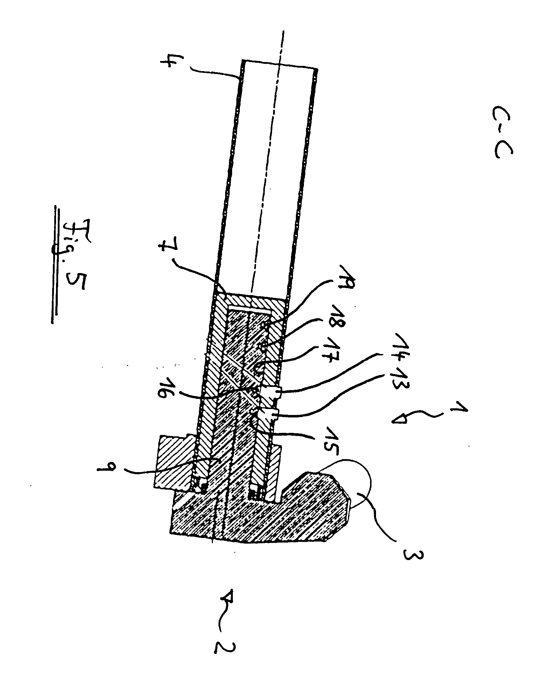

**Figur 5** zeigt einen Schnitt durch den Stummellenker 1 entlang der Schnittlinie C - C der Figur 2. In dieser Schnittansicht ist die "Arretierung" des Schaftabschnitts 9 des Lenkerhalters 2 zu erkennen. Zur Arretierung des Lenkerhalters 2 sind hier zwei Gewindestifte 13, 14 vorgesehen, die radial von außen durch das Standrohr 4 und die Buchse 7 eingeschraubt sind und die in zugeordnete Ausnehmungen 15 bzw. 16 des Schaftabschnitts 9 eingreifen. Wie aus Figur 5 ersichtlich, sind entlang des Schaftabschnitts 9 drei weitere Ausnehmungen 17 - 19 vorgesehen. Die Ausnehmungen 15 - 19 stellen also eine "Rasterung" dar. Das heißt, der Stummellenker 1 ist "gerastert" höhenverstellbar.

**Figur 6** zeigt einen Schnitt durch den Stummellenker 1 entlang der Linie D-D der Figur 2. In dieser Schnittdarstellung ist die "Verdrehsicherung" des Stummellenkers 1 erkennbar. Die Buchse 7 weist hier nämlich eine Passfedernut 20 auf, in der eine Passfeder 21, die in eine entsprechende Passfedervertiefung des Schaftabschnitts 9 des Lenkerhalters 2 eingesetzt ist, verschieblich ist. Die "Passfederverbindung" stellt eine "Drehkopplung" des Lenkerhalters 2 mit der Buchse 7 sicher, ermöglicht aber gleichzeitig eine axiale Verschiebung, d.h. eine Höhenverstellung des Stummellenkers. Alternativ zu einer Passfederverbindung kann auch eine Keil- bzw. Kerbverzahnung vorgesehen sein.

## Patentansprüche

1. Stummellenker für Motorräder mit
einem Lenkerhalter, der mit einem Standrohr einer Motorradgabel verbunden ist,
**dadurch gekennzeichnet, dass** der Lenkerhalter (2) einen rohrförmigen Schaftabschnitt (9) aufweist, der in das Standrohr (4) eingesetzt ist.

2. Stummellenker nach Anspruch 1,
**dadurch gekennzeichnet, dass** in das Standrohr (4) eine Buchse (7) eingesetzt ist, die fest mit dem Standrohr (4) verbunden ist und dass der Lenkerhalter (2) in die Buchse (7) eingesetzt ist.

3. Stummellenker nach Anspruch 1 oder 2,
**dadurch gekennzeichnet, dass** der Lenkerhalter (2) durch lösbare Befestigungsmittel (13, 14) mit dem Standrohr (4) verbunden ist und dass der Lenkerhalter (2) in mehreren verschiedenen axialen Stellungen am Standrohr (2) fixierbar ist.

4. Stummellenker nach Anspruch 3,
**dadurch gekennzeichnet, dass** mindestens ein Schraubelement (13, 14) radial von außen in das Standrohr (4) bzw. in die Buchse (7) eingeschraubt ist und formschlüssig in eine radiale Ausnehmung (15 - 19) des Lenkerhalters (2) eingreift.

5. Stummellenker nach Anspruch 4,
**dadurch gekennzeichnet, dass** das Schraubelement (13, 14) ein Gewindestift ist.

6. Stummellenker nach einem der Ansprüche 3 bis 5,
**dadurch gekennzeichnet, dass** der Lenkerhalter (2) mehrere in Axialrichtung beabstandete radiale Ausnehmungen (15 - 19) aufweist, so dass der Lenkerhalter (2) in mehreren definierten Stellungen fixierbar ist.

7. Stummellenker nach einem der Ansprüche 1 bis 6,
**dadurch gekennzeichnet, dass** eine Verdrehsicherungseinrichtung vorgesehen ist, zum Verhindern einer Verdrehung des Lenkerhalters (2) relativ zum Standrohr (4), wobei der Lenkerhalter selbst in gelöstem Zustand durch die Verdrehsicherung in Drehrichtung mit dem Standrohr (4) gekoppelt ist.

8. Stummellenker nach Anspruch 7,
**dadurch gekennzeichnet, dass** die Verdrehsicherungseinrichtung eine Passfeder (21) aufweist, die den Lenkerhalter (2) in seiner Umfangsrichtung formschlüssig mit der Buchse (7) verbindet.

9. Stummellenker nach einem der Ansprüche 1 bis 8,
**dadurch gekennzeichnet, dass** der Lenkerhalter (2) einen axialen Endanschlag (12) aufweist.

10. Stummellenker nach Anspruch 9,
**dadurch gekennzeichnet, dass** der Lenkerhalter (2) eine Längsnut (10) aufweist und dass ein Endanschlagstift (11) vorgesehen ist, der das Standrohr (4) und die Buchse (7) radial durchsetzt und der in die Längsnut (10) eingreift.

11. Stummellenker nach Anspruch 10,
**dadurch gekennzeichnet, dass** die Längsnut (10) in Umfangsrichtung von der Passfeder (21) beabstandet ist.

12. Stummellenker nach einem der Ansprüche 1 bis 11,
**dadurch gekennzeichnet, dass** zwei Standrohre (4) vorgesehen sind, die über eine Gabelbrücke (6) miteinander verbunden sind und dass in beide Standrohre (4) jeweils ein Lenkerhalter (2) eingesetzt ist.

13. Stummellenker nach Anspruch 12,
**dadurch gekennzeichnet, dass** die beiden Lenkerhalter (2) zur Sicherung gegen Verdrehen in Fahrzeuglängsrichtung miteinander verbunden sind.
